# EUROPÄISCHE PATENTSCHRIFT

(11) **EP 3 347 788 B1**
(45) Veröffentlichungstag und Bekanntmachung des Hinweises auf die Patenterteilung: **15.04.2020**
(21) Anmeldenummer: 16741291.5
(22) Anmeldetag: 15.07.2016
(51) Int. Cl.: B62D 15/02, G05D 1/02

(54) **VERFAHREN UND VORRICHTUNG ZUM BETREIBEN EINES INNERHALB EINES PARKPLATZES FAHRERLOS FAHRENDEN KRAFTFAHRZEUGS**
METHOD AND DEVICE FOR OPERATING A MOTOR VEHICLE TRAVELING DRIVERLESSLY WITHIN A PARKING SPACE
PROCÉDÉ ET DISPOSITIF POUR FAIRE FONCTIONNER UN VÉHICULE À MOTEUR SE DÉPLAÇANT SANS CONDUCTEUR À L'INTÉRIEUR D'UN PARC DE STATIONNEMENT

(30) Priorität: 11.09.2015 DE 102015217387
(43) Veröffentlichungstag der Anmeldung: 18.07.2018
(73) Patentinhaber: Robert Bosch GmbH, 70442 Stuttgart (DE)
(72) Erfinder: NORDBRUCH, Stefan, 70806 Kornwestheim (DE)
(86) Internationale Anmeldenummer: PCT/EP2016/066868
(87) Internationale Veröffentlichungsnummer: WO 2017/041943

(56) Entgegenhaltungen:
- EP-A2- 2 695 797
- WO-A1-2014/023411
- DE-A1-102005 029 336
- US-A1- 2010 156 672

## Beschreibung

Die Erfindung betrifft ein Verfahren und eine Vorrichtung zum Betreiben eines innerhalb eines Parkplatzes fahrerlos fahrenden Kraftfahrzeugs. Die Erfindung betrifft ein Kraftfahrzeug. Die Erfindung betrifft des Weiteren ein Computerprogramm.

### Stand der Technik

Die Offenlegungsschrift DE 10 2012 222 562 A1 zeigt ein System für bewirtschaftete Parkflächen zur Überführung eines Fahrzeugs von einer Startposition in eine Zielposition.

Bei einem vollautomatisierten (autonomen) sogenannten Valet Parking wird ein Kraftfahrzeug von seinem Fahrer auf einer Abgabestelle, zum Beispiel vor einem Parkhaus geparkt und von da fährt das Kraftfahrzeug selber in eine Parkposition / Parkbucht und wieder zurück zur Abgabestelle.

Beim sogenannten vollautomatisierten Valet Parking ist es wichtig, dass das autonom fahrende Kraftfahrzeug keine Unfälle verursacht, zum Beispiel mit einem Objekt, welches sich innerhalb des Parkplatzes befindet, kollidiert.

Die Offenlegungsschrift EP 2 695 797 A2 offenbart ein Verfahren zum fahrerlosen Bewegen eines Fahrzeugs auf einer Parkfläche.

Die Offenlegungsschrift US 2010/0156672 A1 offenbart ein Konzept zum automatischen Parken eines Fahrzeugs.

Die Offenlegungsschrift WO 2014/023411 A1 offenbart ein Verfahren zum Durchführen eines Parkvorgangs.

Die Offenlegungsschrift DE 10 2005 029 336 A1 offenbart ein Verfahren zur selbsttägigen Steuerung eines Fahrzeugs.

### Offenbarung der Erfindung

Die der Erfindung zugrunde liegende Aufgabe ist darin zu sehen, ein effizientes Konzept bereitzustellen, welches ein Unfall- oder Kollisionsrisiko für ein innerhalb eines Parkplatzes fahrerlos fahrendes Kraftfahrzeug effizient verringert.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum Betreiben eines innerhalb eines Parkplatzes fahrerlos fahrenden Kraftfahrzeugs bereitgestellt, umfassend die folgenden Schritte:
- Bestimmen für eine vom Kraftfahrzeug innerhalb des Parkplatzes abzufahrende vorgegebene Solltrajektorie, bis zu welchem Ort der Solltrajektorie eine sichere fahrerlose Fahrt des Kraftfahrzeugs möglich ist, und
- basierend auf der vorgegebenen Solltrajektorie fahrerloses Fahren des Kraftfahrzeugs bis zum bestimmten Ort.

Nach einem weiteren Aspekt wird eine Vorrichtung zum Betreiben eines innerhalb eines Parkplatzes fahrerlos fahrenden Kraftfahrzeugs bereitgestellt, umfassend:
- eine Bestimmungseinrichtung zum Bestimmen für eine vom Kraftfahrzeug innerhalb des Parkplatzes abzufahrende vorgegebene Solltrajektorie, bis zu welchem Ort der Solltrajektorie eine sichere fahrerlose Fahrt des Kraftfahrzeugs möglich ist, und
- eine Führungseinrichtung zum fahrerlosen Führen des Kraftfahrzeugs, wobei die Führungseinrichtung ausgebildet ist, basierend auf der vorgegebenen Solltrajektorie das Kraftfahrzeug bis zum bestimmten Ort fahrerlos zu führen.

Nach einem weiteren Aspekt wird ein Kraftfahrzeug bereitgestellt, welches die Vorrichtung zum Betreiben eines innerhalb eines Parkplatzes fahrerlos fahrenden Kraftfahrzeugs umfasst.

Gemäß einem weiteren Aspekt wird ein Computerprogramm bereitgestellt, welches Programmcode zur Durchführung des Verfahrens zum Betreiben eines innerhalb eines Parkplatzes fahrerlos fahrenden Kraftfahrzeugs umfasst, wenn das Computerprogramm auf einem Computer ausgeführt wird.

Die Erfindung umfasst also insbesondere und unter anderem den Gedanken, das Kraftfahrzeug nur bis zu dem Ort einer Solltrajektorie fahrerlos fahren zu lassen, bis zu welchem eine sichere fahrerlose Fahrt sichergestellt werden kann. Das heißt also, dass die fahrerlose Fahrt des Kraftfahrzeugs bis zum bestimmten Ort als sicher eingestuft werden kann. Dadurch wird insbesondere der technische Vorteil bewirkt, dass ein Unfall oder Kollisionsrisiko für ein innerhalb eines Parkplatzes fahrerlos fahrenden Kraftfahrzeug effizient verringert werden kann. Insbesondere wird dadurch der technische Vorteil bewirkt, dass ein Unfall oder Kollisionsrisiko für einen sich innerhalb des Parkplatzes befindenden Verkehrsteilnehmer effizient verringert werden kann.

Eine sichere fahrerlose Fahrt des Kraftfahrzeugs bezeichnet insbesondere eine fahrerlose Fahrt, während welcher ein Unfall nur mit einer vorbestimmten Umfallwahrscheinlichkeit auftreten wird respektive eine Kollision mit einem Objekt nur mit einer vorbestimmten Kollisionswahrscheinlichkeit auftreten wird.

Das Bestimmen des Ortes umfasst zum Beispiel, dass eine Distanz relativ zu einer momentanen Position des Kraftfahrzeugs in einer durch die Solltrajektorie vorgegebene Fahrrichtung bestimmt wird, die das Kraftfahrzeug noch sicher fahrerlos abfahren kann.

Das heißt also insbesondere, dass die Distanz bestimmt wird, die das Kraftfahrzeug basierend auf der Solltrajektorie noch sicher fahrerlos fahren kann.

Dass das Kraftfahrzeug basierend auf der vorgegebenen Solltrajektorie fahrerlos fährt, heißt insbesondere, dass eine Ist-Trajektorie des Kraftfahrzeugs auf die Solltrajektorie geregelt oder gesteuert wird.

Dass das Kraftfahrzeug fahrerlos, auch führerlos, fährt, bedeutet oder heißt, dass das Kraftfahrzeug nicht von einem menschlichen Fahrer oder menschlichen Fahrzeugführer gesteuert oder geführt wird. Eine fahrerlose oder führerlose Fahrt umfasst zum Beispiel, dass das Kraftfahrzeug ferngesteuert wird. Dies bedeutet zum Beispiel, dass Fernsteuerungsbefehle an das Kraftfahrzeug gesendet werden. Eine fahrerlose oder führerlose Fahrt umfasst zum Beispiel, dass das Kraftfahrzeug autonom, also selbstständig, fährt. Zum Beispiel sind Mischformen vorgesehen, das heißt, dass das Kraftfahrzeug eine Teilstrecke ferngesteuert wird und eine andere Teilstrecke autonom fährt.

Zum Beispiel ist vorgesehen, dass dem Kraftfahrzeug eine Zielposition innerhalb des Parkplatzes übermittelt wird, wobei das Kraftfahrzeug dann zu dieser Zielposition autonom, also selbstständig, fährt. Das Kraftfahrzeug navigiert zum Beispiel zu der Zielposition basierend auf einer digitalen Karte des Parkplatzes. Diese digitale Karte wird dem Kraftfahrzeug zum Beispiel über ein Kommunikationsnetzwerk übermittelt. Allgemein werden zum Beispiel dem Kraftfahrzeug Informationen über das Kommunikationsnetzwerk übermittelt, die relevant für eine autonome Fahrt innerhalb des Parkplatzes sind. Das Kraftfahrzeug fährt dann basierend auf diesen Informationen autonom innerhalb des Parkplatzes, insbesondere zur Zielposition. Solche Informationen umfassen zum Beispiel: Positionen von weiteren Kraftfahrzeugen, Geschwindigkeitsdaten von weiteren Kraftfahrzeugen, eine vom Kraftfahrzeug abzufahrende Solltrajektorie.

Ein Kommunikationsnetzwerk im Sinne der vorliegenden Erfindung umfasst insbesondere ein WLAN-Kommunikationsnetzwerk und/oder ein Mobilfunknetzwerk und/oder ein Kommunikationsnetzwerk nach dem LoRa-Standard. "LoRa" steht für "Low Power Wide-Range Communication". Das Kommunikationsnetzwerk umfasst somit nach einer Ausführungsform ein LoRa-Kommunikationsnetzwerk.

In einer anderen Ausführungsform wird respektive ist eine Kommunikation über das Kommunikationsnetzwerk verschlüsselt.

Die Formulierung "respektive" umfasst insbesondere die Formulierung "und/oder".

Fahrzeuge im Sinne der vorliegenden Erfindung sind Kraftfahrzeuge.

Ein Parkplatz im Sinne der vorliegenden Erfindung kann als eine Parkfläche bezeichnet werden und dient als Abstellfläche für Fahrzeuge. Der Parkplatz bildet somit eine zusammenhängende Fläche, die mehrere Stellplätze (bei einem Parkplatz auf privatem Grund) oder Parkstände (bei einem Parkplatz auf öffentlichem Grund) aufweist. Der Parkplatz ist nach einer Ausführungsform als ein Parkhaus ausgebildet. Der Parkplatz ist nach einer Ausführungsform als einer eine Parkgarage ausgebildet.

Nach einer Ausführungsform ist vorgesehen, dass der Ort basierend auf einer Erfassungsreichweite einer Umfeldsensorik des Kraftfahrzeugs und/oder auf einer Erfassungsreichweite einer Umfeldsensorik des Parkplatzes bestimmt wird, so dass der Ort innerhalb der entsprechenden Erfassungsreichweite liegt.

Dadurch wird insbesondere der technische Vorteil bewirkt, dass effizient sichergestellt werden kann, dass das entsprechende Umfeld bis zum bestimmten Ort sensorisch erfasst werden kann. Das heißt also, dass das Kraftfahrzeug nur so weit fahrerlos fährt, wie das Kraftfahrzeug sensorisch seine Umgebung erfassen kann respektive eine Umfeldsensorik des Parkplatzes ein Umfeld des Kraftfahrzeugs erfassen kann. Somit kann also in vorteilhafter Weise verhindert werden, dass das Kraftfahrzeug sozusagen blind fahrerlos fahren muss.

Die Umfeldsensorik des Kraftfahrzeugs kann als eine Kraftfahrzeugumfeldsensorik bezeichnet werden. Die Umfeldsensorik des Parkplatzes kann als eine Parkplatzumfeldsensorik bezeichnet werden.

Eine Umfeldsensorik im Sinne der vorliegenden Erfindung umfasst nach einer Ausführungsform einen oder mehrere Umfeldsensoren. Ein Umfeldsensor ist zum Beispiel einer der folgenden Umfeldsensoren: Videosensor, Lasersensor, Ultraschallsensor, Lidarsensor, Magnetsensor oder Radarsensor.

Nach einer weiteren Ausführungsform ist vorgesehen, dass die Umfeldsensorik(en) mehrere Umfeldsensoren mit jeweiligen Erfassungsreichweiten umfasst respektive umfassen, wobei der Ort basierend auf der kleinsten Erfassungsreichweite der jeweiligen Erfassungsreichweiten bestimmt wird, so dass der Ort innerhalb der kleinsten Erfassungsreichweite liegt.

Dadurch wird insbesondere der technische Vorteil bewirkt, dass effizient sichergestellt werden kann, dass das Kraftfahrzeug mittels sämtlicher mehrerer Umfeldsensoren sein Umfeld bis zum bestimmten Ort erfassen kann. So gibt also der Umfeldsensor mit der kleinsten Erfassungsreichweite die Distanz vor, bis zu welcher das Kraftfahrzeug bezogen auf seine momentane Position und bezogen auf die durch die Solltrajektorie vorgegebene Fahrrichtung fahren darf. Somit sehen sozusagen die mehreren Umfeldsensoren bis mindestens zum vorbestimmten Ort.

Gemäß einer weiteren Ausführungsform ist vorgesehen, dass die mehreren Umfeldsensoren einer Untermenge der gesamten Umfeldsensoren der jeweiligen Umfeldsensorik entsprechen.

Das heißt also insbesondere, dass nicht sämtliche Umfeldsensoren der jeweiligen Umfeldsensorik zum Bestimmen des Ortes verwendet werden. Vielmehr ist gemäß dieser Ausführungsform vorgesehen, dass lediglich eine Untermenge der Umfeldsensoren verwendet wird. Dadurch wird insbesondere der technische Vorteil bewirkt, dass das Bestimmen effizient durchgeführt werden kann. Dadurch also, dass nun weniger Daten verarbeitet werden müssen bezogen auf den Fall, in welchem sämtliche Umfeldsensoren der jeweiligen Umfeldsensorik zum Bestimmen des Ortes verwendet werden, kann in vorteilhafter Weise eine hierfür benötigte Rechenkapazität reduziert oder verringert werden.

Insbesondere Umfeldsensoren, die am Heck des Kraftfahrzeugs angeordnet sind und ein heckseitiges Umfeld in rückwärtiger Fahrrichtung erfassen, können in der Regel aufgrund ihrer Anordnung am Kraftfahrzeug nicht den frontseitigen Raum oder den frontseitigen Bereich vor dem Kraftfahrzeug sensorisch erfassen. Insofern ist es technisch sinnvoll und effizient, diese Umfeldsensoren nicht für das Bestimmen des Ortes zu verwenden.

Ein Umfeldsensor im Sinne der vorliegenden Erfindung ist also insbesondere ausgebildet, ein Umfeld des Kraftfahrzeugs zu erfassen und entsprechend dem erfassten Umfeld Umfelddaten zu ermitteln. Basierend auf den Umfelddaten ist nach einer Ausführungsform vorgesehen, dass geprüft wird, ob sich im Umfeld des Kraftfahrzeugs ein Objekt befindet, welches mit einer vorbestimmten Wahrscheinlichkeit mit dem Kraftfahrzeug kollidieren könnte. Sofern also zum Beispiel bei diesem Prüfen festgestellt wird, dass sich ein solches Objekt im Umfeld des Kraftfahrzeugs befindet, ist dann vorgesehen, dass das Kraftfahrzeug nicht bis zu diesem Objekt fahrerlos fährt, sondern nur bis zu einem Ort, der vor diesem Objekt bezogen auf die Fahrrichtung des Kraftfahrzeugs liegt. Somit wird also in vorteilhafter Weise sichergestellt, dass stets ein Abstand oder eine Distanz zwischen dem Kraftfahrzeug und diesem Objekt erhalten bleibt.

Nach einer weiteren Ausführungsform ist vorgesehen, dass eine momentane Geschwindigkeit des Kraftfahrzeugs gemessen wird, wobei der Ort basierend auf der gemessenen momentanen Geschwindigkeit bestimmt wird.

Dadurch wird insbesondere der technische Vorteil bewirkt, dass der Ort effizient bestimmt werden kann. Denn so ist zum Beispiel ein Bremsweg für das Kraftfahrzeug bei einer höheren Geschwindigkeit größer als bei einer niedrigeren Geschwindigkeit. Das heißt also, dass in einem solchen Fall die Distanz zum Ort, bis zu welchem eine sichere fahrerlose Fahrt des Kraftfahrzeugs möglich ist, reduziert wird im Vergleich zu dem Fall, in welchem das Kraftfahrzeug mit einer niedrigeren Geschwindigkeit fahrerlos fährt.

Nach einer anderen Ausführungsform ist vorgesehen, dass eine Bewegung von einem sich innerhalb des Parkplatzes befindenden Verkehrsteilnehmer prädiziert wird, wobei der Ort basierend auf der prädizierten Bewegung bestimmt wird.

Dadurch wird insbesondere der technische Vorteil bewirkt, dass der Ort effizient bestimmt werden kann. Insbesondere wird dadurch der technische Vorteil bewirkt, dass ein Kollisionsrisiko einer Kollision mit diesem Verkehrsteilnehmer weiter effizient verringert werden kann. So kann dann zum Beispiel der Ort derart bestimmt werden, dass ein vorgegebener Mindestabstand zu dem Verkehrsteilnehmer eingehalten wird, unabhängig davon, wohin sich der Verkehrsteilnehmer bewegt.

Nach einer weiteren Ausführungsform ist vorgesehen, dass ein Distanzsicherheitspuffer vorgegeben wird, so dass, nachdem der Ort bestimmt wurde, ein neuer Ort der Solltrajektorie bestimmt wird, der auf der Solltrajektorie demjenigen Ort entspricht, der bezogen auf eine durch die Solltrajektorie vorgegebene Fahrrichtung vor dem bestimmten Ort und mit dem Distanzsicherheitspuffer beabstandet zu dem bestimmten Ort auf der Solltrajektorie liegt, wobei der bestimmte neue Ort den bestimmten Ort ersetzt.

Dadurch wird insbesondere der technische Vorteil bewirkt, dass zum Beispiel Messungenauigkeiten bei der Umfeldsensorik und/oder beim Bestimmen berücksichtigt und insbesondere kompensiert werden können.

Gemäß einer weiteren Ausführungsform ist vorgesehen, dass das Kraftfahrzeug automatisch an dem bestimmten Ort anhält, wenn für eine nach dem bestimmten Ort liegende Teilstrecke der Solltrajektorie kein Ort bestimmt werden konnte, bis zu dem eine sichere fahrerlose Fahrt des Kraftfahrzeugs möglich ist.

Dadurch wird insbesondere der technische Vorteil bewirkt, dass das Kollisionsrisiko effizient noch weiter verringert werden kann. Denn somit ist gewährleistet, dass das Kraftfahrzeug stets eine sichere fahrerlose Fahrt durchführt.

Nach einer Ausführungsform ist vorgesehen, dass die Vorrichtung zum Betreiben eines innerhalb eines Parkplatzes fahrerlos fahrenden Kraftfahrzeugs ausgebildet oder eingerichtet ist, das Verfahren zum Betreiben eines innerhalb eines Parkplatzes fahrerlos fahrenden Kraftfahrzeugs aus- oder durchzuführen.

Technische Funktionalitäten der Vorrichtung ergeben sich analog aus entsprechenden technischen Funktionalitäten des Verfahrens und umgekehrt.

Nach einer Ausführungsform ist vorgesehen, dass das Verfahren mittels der Vorrichtung durch- oder ausgeführt wird.

Nach einer Ausführungsform umfasst die Vorrichtung eine Umfeldsensorik.

Nach einer Ausführungsform ist vorgesehen, dass das Kraftfahrzeug ausgebildet oder eingerichtet ist, das Verfahren zum Betreiben eines innerhalb eines Parkplatzes fahrerlos fahrenden Kraftfahrzeugs aus- oder durchzuführen.

Nach einer Ausführungsform umfasst der Parkplatz eine Umfeldsensorik.

Nach einer anderen Ausführungsform umfasst das Kraftfahrzeug eine Umfeldsensorik.

Nach einer Ausführungsform ist vorgesehen, dass die Bestimmungseinrichtung ausgebildet ist, den Ort basierend auf einer Erfassungsreichweite einer Umfeldsensorik des Kraftfahrzeugs und/oder auf einer Erfassungsreichweite einer Umfeldsensorik des Parkplatzes zu bestimmen, so dass der Ort innerhalb der entsprechenden Erfassungsreichweite liegt.

Gemäß einer weiteren Ausführungsform ist vorgesehen, dass die Umfeldsensorik(en) mehrere Umfeldsensoren mit jeweiligen Erfassungsreichweiten umfasst respektive umfassen, wobei die Bestimmungseinrichtung ausgebildet ist, den Ort basierend auf der kleinsten Erfassungsreichweite der jeweiligen Erfassungsreichweiten zu bestimmen, so dass der Ort innerhalb der kleinsten Erfassungsreichweite liegt.

In noch einer Ausführungsform ist vorgesehen, dass die mehreren Umfeldsensoren einer Untermenge der gesamten Umfeldsensoren der jeweiligen Umfeldsensorik entsprechen.

Gemäß einer weiteren Ausführungsform ist vorgesehen, dass eine Messeinrichtung zum Messen einer momentanen Geschwindigkeit des Kraftfahrzeugs vorgesehen ist, wobei die Bestimmungseinrichtung ausgebildet ist, den Ort basierend auf der gemessenen momentanen Geschwindigkeit zu bestimmen.

Nach noch einer Ausführungsform ist vorgesehen, dass eine Prädizierungseinrichtung zum Prädizieren einer Bewegung von einem sich innerhalb des Parkplatzes befindenden Verkehrsteilnehmer vorgesehen ist, wobei die Bestimmungseinrichtung ausgebildet ist, den Ort basierend auf der prädizierten Bewegung zu bestimmen.

In einer anderen Ausführungsform ist vorgesehen, dass die Bestimmungseinrichtung ausgebildet ist, nachdem der Ort bestimmt wurde, einen neuen Ort der Solltrajektorie zu bestimmen, der auf der Solltrajektorie demjenigen Ort entspricht, der bezogen auf eine durch die Solltrajektorie vorgegebene Fahrrichtung vor dem bestimmten Ort und mit einem vorgegebenen Distanzsicherheitspuffer beabstandet zu dem bestimmten Ort auf der Solltrajektorie liegt, wobei die Bestimmungseinrichtung ausgebildet ist, den bestimmten neuen Ort durch den bestimmten Ort zu ersetzen, so dass der bestimmte Ort dem bestimmen neuen Ort entspricht.

Nach noch einer Ausführungsform ist vorgesehen, dass die Führungseinrichtung ausgebildet, das Kraftfahrzeug automatisch an dem bestimmten Ort anzuhalten, wenn für eine nach dem bestimmten Ort liegende Teilstrecke der Solltrajektorie kein Ort bestimmt werden konnte, bis zu dem eine sichere fahrerlose Fahrt des Kraftfahrzeugs möglich ist.

Das Bestimmen des Orts wird nach einer Ausführungsform im Kraftfahrzeug selbst durchgeführt. Die Bestimmungseinrichtung ist zum Beispiel Teil des Kraftfahrzeugs.

In einer weiteren Ausführungsform wird das Bestimmen des Orts kraftfahrzeugextern durchgeführt. Die Bestimmungseinrichtung ist zum Beispiel stationär, also kraftfahrzeugextern, angeordnet.

In einer Ausführungsform ist vorgesehen, dass das Bestimmen des Orts sowohl kraftfahrzeugintern als auch kraftfahrzeugextern durchgeführt wird, wobei beide Ergebnisse miteinander abgeglichen werden.

Die Erfindung wird im Folgenden anhand von bevorzugten Ausführungsbeispielen näher erläutert. Hierbei zeigen
Fig. 1 ein Ablaufdiagramm eines Verfahrens zum Betreiben eines innerhalb eines Parkplatzes fahrerlos fahrenden Kraftfahrzeugs,
Fig. 2 eine Vorrichtung zum Betreiben eines innerhalb eines Parkplatzes fahrerlos fahrenden Kraftfahrzeugs,
Fig. 3 ein Kraftfahrzeug und
Fig. 4 das Kraftfahrzeug der Fig. 3 bei einer fahrerlosen Fahrt innerhalb eines Parkplatzes.

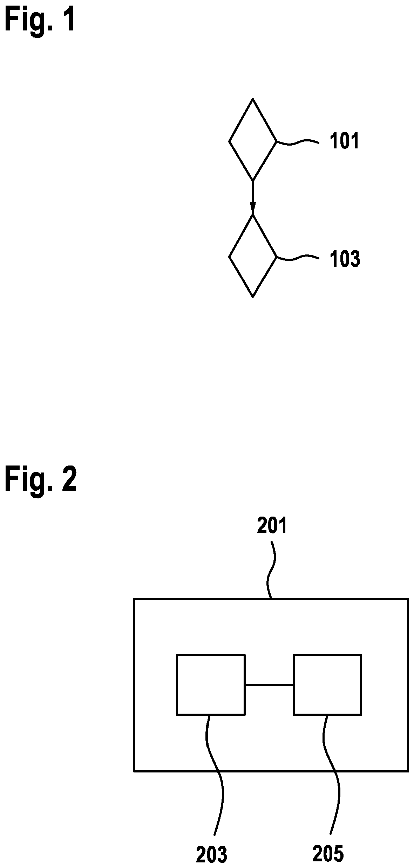

Fig. 1 zeigt ein Ablaufdiagramm eines Verfahrens zum Betreiben eines innerhalb eines Parkplatzes fahrerlos fahrenden Kraftfahrzeugs.

Das Verfahren umfasst die folgenden Schritte:
- Bestimmen 101 für eine vom Kraftfahrzeug innerhalb des Parkplatzes abzufahrende vorgegebene Solltrajektorie, bis zu welchem Ort der Solltrajektorie eine sichere fahrerlose Fahrt des Kraftfahrzeugs möglich ist, und
- basierend auf der vorgegebenen Solltrajektorie fahrerloses Fahren 103 des Kraftfahrzeugs bis zum bestimmten Ort.

Die vorgegebene Solltrajektorie wird nach einer Ausführungsform über ein Kommunikationsnetzwerk an die Vorrichtung respektive das Kraftfahrzeug übermittelt. Zum Beispiel ist nach einer Ausführungsform vorgesehen, dass ein Parkplatzverwaltungssystem des Parkplatzes die vorgegebene Solltrajektorie ermittelt oder berechnet und anschließend über das Kommunikationsnetzwerk an das Kraftfahrzeug respektive die Vorrichtung sendet.

Nach einer Ausführungsform ist vorgesehen, dass die vorgegebene Solltrajektorie kraftfahrzeugintern, also im Kraftfahrzeug selbst, ermittelt oder berechnet wird.

Nach einer Ausführungsform ist vorgesehen, dass die vorgegebene Solltrajektorie mittels der Vorrichtung ermittelt oder berechnet wird, zum Beispiel mittels der Bestimmungseinrichtung.

Nach einer Ausführungsform umfasst die Vorrichtung respektive das Kraftfahrzeug eine Kommunikationsschnittstelle für eine Kommunikation über ein Kommunikationsnetzwerk. Die Kommunikationsschnittstelle ist zum Beispiel ausgebildet, die vorgegebene Solltrajektorie über ein Kommunikationsnetzwerk zu empfangen.

Fig. 2 zeigt eine Vorrichtung 201 zum Betreiben eines innerhalb eines Parkplatzes fahrerlos fahrenden Kraftfahrzeugs.

Die Vorrichtung 201 umfasst:
- eine Bestimmungseinrichtung 203 zum Bestimmen für eine vom Kraftfahrzeug innerhalb des Parkplatzes abzufahrende vorgegebene Solltrajektorie, bis zu welchem Ort der Solltrajektorie eine sichere fahrerlose Fahrt des Kraftfahrzeugs möglich ist, und
- eine Führungseinrichtung 205 zum fahrerlosen Führen des Kraftfahrzeugs, wobei die Führungseinrichtung ausgebildet ist, basierend auf der vorgegebenen Solltrajektorie das Kraftfahrzeug bis zum bestimmten Ort fahrerlos zu führen.

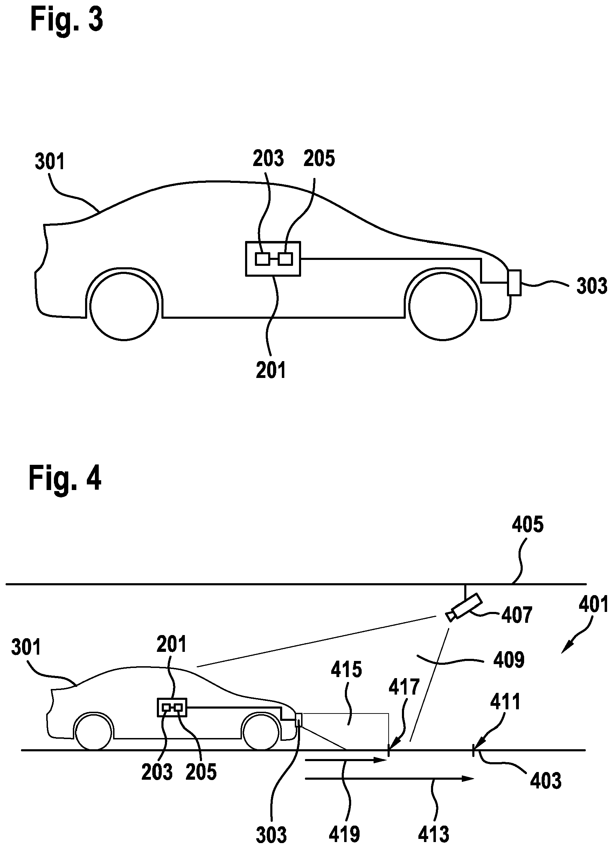

Fig. 3 zeigt ein Kraftfahrzeug 301, welches die Vorrichtung 201 der Fig. 2 umfasst.

Das Kraftfahrzeug 301 umfasst ferner einen Umfeldsensor 303, der zum Beispiel ein Radarsensor ist. In nicht gezeigten Ausführungsformen umfasst das Kraftfahrzeug 301 mehrere Umfeldsensoren. Der Umfeldsensor 303 respektive die mehreren Umfeldsensoren bilden eine Umfeldsensorik des Kraftfahrzeugs 301.

Der Umfeldsensor 303 erfasst ein Umfeld des Kraftfahrzeugs 301 und ermittelt dem erfassten Umfeld entsprechende Umfelddaten. Diese Umfelddaten stellt der Umfeldsensor 303, allgemein die Umfeldsensorik, der Vorrichtung 201 zur Verfügung, sodass diese basierend auf den Umfelddaten den Ort bestimmen kann, bis zu welchem das Kraftfahrzeug 301 sicher fahrerlos fahren kann.

Fig. 4 zeigt einen Parkplatz 401.

Der Produkt 401 umfasst eine Fahrbahn 403, auf welcher das Kraftfahrzeug 301 fahrerlos fährt. An einer Decke 405 des Parkplatzes 401 ist eine Videokamera 407 angebracht, die ein frontseitiges Umfeld 409 des Kraftfahrzeugs 301 erfassen kann.

Das Kraftfahrzeug 301 erfasst mittels seiner Umfeldsensorik, also insbesondere mittels seines Umfeldsensors 303, ebenfalls ein frontseitiges Umfeld 415. Da der Umfeldsensor 303 eine geringere Erfassungsreichweite hat als die Videokamera 407 ist das Umfeld 415 kleiner als das Umfeld 409.

Das Kraftfahrzeug 301 umfasst ferner noch einen weiteren Umfeldsensor, der der Übersicht halber nicht gezeigt ist. Dieser Umfeldsensor weist eine größere Reichweite als der Umfeldsensor 303 auf. Technisch möglich wäre somit eine abzufahrende Solltrajektorie für das Kraftfahrzeug 301, die bis zu einem Ort 411 auf der Fahrbahn 403 führt. Denn zum einen ist mittels der Videokamera 407 ein größeres Umfeld als mittels des Umfeldsensors 303 erfassbar. Zum anderen weist der weitere Umfeldsensor eine entsprechend große Erfassungsreichweite auf, sodass der weitere Umfeldsensor bis zum Ort 411 das Umfeld des Kraftfahrzeugs 301 erfassen kann.

Der Pfeil mit dem Bezugszeichen 413 kennzeichnet symbolisch eine fahrerlose Fahrt entlang einer entsprechenden Solltrajektorie, die bis zum Ort 411 führt.

Dennoch ist erfindungsgemäß vorgesehen, dass der Umfeldsensor 303 mit der kleinsten Erfassungsreichweite die maximale Distanz vorgibt, bis zu welcher das Kraftfahrzeug 301 fahrerlos fahren darf. Der dieser maximalen Distanz entsprechende Ort auf der Fahrbahn 411 ist mit einem Pfeil mit dem Bezugszeichen 417 gekennzeichnet. Ein Pfeil mit dem Bezugszeichen 419 kennzeichnet symbolisch die fahrerlose Fahrt des Kraftfahrzeugs 301 bis zum Ort 417.

Das heißt also, dass das Kraftfahrzeug nur bis zum Ort 417 fahrerlos fahren wird, obwohl es theoretisch bis zum Ort 411 fahren könnte. Doch da der Umfeldsensor 303 nicht bis zum Ort 411 das Umfeld des Kraftfahrzeugs 301 erfassen kann, ist diese theoretische Möglichkeit erfindungsgemäß nicht vorgesehen.

Durch das vorstehend beschriebene erfindungsgemäße Konzept kann somit in vorteilhafter Weise eine besonders sichere fahrerlose Fahrt des Kraftfahrzeugs 301 innerhalb des Parkplatzes 401 sichergestellt werden.

Sobald das Kraftfahrzeug am Ort 417 angekommen ist, ist nach einer Ausführungsform vorgesehen, dass das Kraftfahrzeug 301 seine fahrerlose Fahrt fortsetzt. Dies aber nach einer Ausführungsform nur dann, wenn für eine vor diesem Ort 417 liegende Teilstrecke ein Ort bestimmt werden konnte, bis zu dem eine sichere fahrerlose Fahrt des Kraftfahrzeugs 301 möglich ist. Dieser Ort wird zum Beispiel analog zum Ort 417 basierend auf der kleinsten Erfassungsreichweite bestimmt, also hier basierend auf der Erfassungsreichweite des Umfeldsensors 303. Das heißt also, dass das Kraftfahrzeug 301 ab dem Ort 417 zum Beispiel nur eine Distanz abfährt, die der Distanz entspricht, die das Kraftfahrzeug 301 von seiner momentanen Position zum Ort 417 zurückgelegt hat.

Sofern aber kein Ort nach diesem Ort 417 bestimmt werden konnte, bis zu dem eine sichere fahrerlose Fahrt des Kraftfahrzeugs 301 möglich ist, so ist nach einer Ausführungsform vorgesehen, dass das Kraftfahrzeug 301 am Ort 417 anhält.

Somit kann stets in vorteilhafter Weise eine sichere fahrerlose Fahrt des Kraftfahrzeugs sichergestellt werden.

Die Erfindung stellt also insbesondere und unter anderem ein effizientes technisches Konzept bereit, welches ein Unfall- oder Kollisionsrisiko für das fahrerlos fahrende Kraftfahrzeug effizient verringern kann. Ein erfindungsgemäßer Grundgedanke ist insbesondere darin zu sehen, dass die abzufahrende Solltrajektorie nach einer Ausführungsform auf eine Distanz gekürzt wird, die in diesem Augenblick als sicher gilt. Gekürzt bedeutet nach einer Ausführungsform, dass die Solltrajektorie auf diese Distanz beschränkt bleibt. Nach einer weiteren Ausführungsform ist vorgesehen, dass die Solltrajektorie zwar noch über diese Distanz vorhanden ist, aber nur der Teil der Solltrajektorie bis zur Distanz gültig ist. Gültig heißt, dass das Kraftfahrzeug nur die Solltrajektorie bis zur Distanz abfahren darf.

Die sichere Distanz wird nach einer Ausführungsform durch den Bereich, der von den Umfeldsensoren im Kraftfahrzeug und/oder vom Parkplatz eingesehen und analysiert werden kann, ermittelt oder bestimmt.

Nach einer Ausführungsform ist vorgesehen, dass sämtliche Umfeldsensoren des Kraftfahrzeugs respektive des Parkplatzes den Bereich einsehen müssen, innerhalb welchem das Kraftfahrzeug fahren darf. Das heißt, dass sich die maximale Distanz, die das Kraftfahrzeug fahren darf, aus demjenigen Umfeldsensor ergibt, der die kleinste Erfassungsreichweite aufweist.

Nach einer weiteren Ausführungsform ist vorgesehen, dass nur eine Untermenge der Umfeldsensoren bezogen auf die gesamten Umfeldsensoren für die Berechnung der Distanz, also für das Bestimmen des Ortes, verwendet wird. Dies ist insbesondere dann von Vorteil, wenn es sehr viele Umfeldsensoren gibt. Sehr viele heißt zum Beispiel, dass es mehr als fünf Umfeldsensoren gibt. Zum Beispiel ist bei fünf Umfeldsensoren vorgesehen, dass nur vier Umfeldsensoren für die Berechnung der Distanz verwendet werden.

Nach einer Ausführungsform wird die maximale Distanz zusätzlich basierend auf einer Fahrzeuggeschwindigkeit ermittelt oder berechnet. Das heißt, dass dadurch zum Beispiel die maximale Distanz geringer wird im Vergleich zu dem Fall, in dem die Geschwindigkeit des Kraftfahrzeugs nicht berücksichtigt wird.

Nach einer Ausführungsform wird eine Geschwindigkeit von möglichen in Kürze erscheinenden Objekten (zum Beispiel weitere Kraftfahrzeuge, Fußgänger) bei oder für die Berechnung der maximalen Distanz berücksichtigt. Das heißt also, dass eine Prädiktion einer Bewegung eines Verkehrsteilnehmers durchgeführt wird, wobei der Ort basierend auf der prädizierten Bewegung bestimmt wird.

Nach einer Ausführungsform wird ein Distanzsicherheitspuffer mitberücksichtigt, um zum Beispiel Messungenauigkeiten bei den Umfeldsensoren und/oder den Analysen zu berücksichtigen.

Sollte die Solltrajektorie in einem folgenden Analyseschritt nicht aktualisiert und damit verlängert werden, so fährt das Kraftfahrzeug maximal bis zu der als sicher eingestuften Distanz. Das heißt also, dass nach einer Ausführungsform das Kraftfahrzeug automatisch an dem bestimmten Ort anhält, wenn für eine nach dem bestimmten Ort liegende Teilstrecke der Solltrajektorie kein Ort bestimmt werden konnte, bis zu dem eine sichere fahrerlose Fahrt des Kraftfahrzeugs möglich ist.

Der erfindungsgemäße Vorteil ist insbesondere darin zu sehen, dass das Kraftfahrzeug nur bis zum Ende der als sicher eingestuften Distanz fahrerlos fährt.

## Patentansprüche

1. Verfahren zum Betreiben eines innerhalb eines Parkplatzes (401) fahrerlos fahrenden Kraftfahrzeugs (301), umfassend die folgenden Schritte:
- Bestimmen (101) für eine vom Kraftfahrzeug (301) innerhalb des Parkplatzes abzufahrende vorgegebene Solltrajektorie, bis zu welchem Ort der Solltrajektorie eine sichere fahrerlose Fahrt des Kraftfahrzeugs (301) möglich ist, und
- basierend auf der vorgegebenen Solltrajektorie fahrerloses Fahren (103) des Kraftfahrzeugs (301) bis zum bestimmten Ort (417),
- wobei eine sichere fahrerlose Fahrt des Kraftfahrzeugs (301) eine fahrerlose Fahrt bezeichnet, während welcher ein Unfall nur mit einer vorbestimmten Unfallwahrscheinlichkeit auftreten wird respektive eine Kollision mit einem Objekt nur mit einer vorbestimmten Kollisionswahrscheinlichkeit auftreten wird,
- wobei der Ort basierend auf einer Erfassungsreichweite einer Umfeldsensorik (303) des Kraftfahrzeugs (301) und/oder auf einer Erfassungsreichweite einer Umfeldsensorik (407) des Parkplatzes (401) bestimmt wird, so dass der Ort innerhalb der entsprechenden Erfassungsreichweite liegt, **dadurch gekennzeichnet, dass**
- die Umfeldsensorik(en) (303, 407) mehrere Umfeldsensoren (303, 407) mit jeweiligen Erfassungsreichweiten umfasst respektive umfassen, wobei der Ort basierend auf der kleinsten Erfassungsreichweite der jeweiligen Erfassungsreichweiten bestimmt wird, so dass der Ort innerhalb der kleinsten Erfassungsreichweite liegt.

2. Verfahren nach Anspruch 1, wobei die mehreren Umfeldsensoren (303, 407) einer Untermenge der gesamten Umfeldsensoren (303, 407) der jeweiligen Umfeldsensorik (303, 407) entsprechen.

3. Verfahren nach einem der vorherigen Ansprüche, wobei eine momentane Geschwindigkeit des Kraftfahrzeugs (301) gemessen wird, wobei der Ort basierend auf der gemessenen momentanen Geschwindigkeit bestimmt wird.

4. Verfahren nach einem der vorherigen Ansprüche, wobei eine Bewegung von einem sich innerhalb des Parkplatzes (401) befindenden Verkehrsteilnehmer prädiziert wird, wobei der Ort basierend auf der prädizierten Bewegung bestimmt wird.

5. Verfahren nach einem der vorherigen Ansprüche, wobei ein Distanzsicherheitspuffer vorgegeben wird, so dass, nachdem der Ort bestimmt wurde, ein neuer Ort der Solltrajektorie bestimmt wird, der auf der Solltrajektorie demjenigen Ort entspricht, der bezogen auf eine durch die Solltrajektorie vorgegebene Fahrrichtung vor dem bestimmten Ort und mit dem Distanzsicherheitspuffer beabstandet zu dem bestimmten Ort auf der Solltrajektorie liegt, wobei der bestimmte neue Ort den bestimmten Ort ersetzt.

6. Verfahren nach einem der vorherigen Ansprüche, wobei das Kraftfahrzeug (301) automatisch an dem bestimmten Ort anhält, wenn für eine nach dem bestimmten Ort liegende Teilstrecke der Solltrajektorie kein Ort bestimmt werden konnte, bis zu dem eine sichere fahrerlose Fahrt des Kraftfahrzeugs (301) möglich ist.

7. Vorrichtung (201) zum Betreiben eines innerhalb eines Parkplatzes (401) fahrerlos fahrenden Kraftfahrzeugs (301), umfassend:
- eine Bestimmungseinrichtung (203) zum Bestimmen für eine vom Kraftfahrzeug (301) innerhalb des Parkplatzes (401) abzufahrende vorgegebene Solltrajektorie, bis zu welchem Ort der Solltrajektorie eine sichere fahrerlose Fahrt des Kraftfahrzeugs (301) möglich ist, und
- eine Führungseinrichtung (205) zum fahrerlosen Führen des Kraftfahrzeugs (301), wobei die Führungseinrichtung (205) ausgebildet ist, basierend auf der vorgegebenen Solltrajektorie das Kraftfahrzeug (301) bis zum bestimmten Ort (417) fahrerlos zu führen,
- wobei eine sichere fahrerlose Fahrt des Kraftfahrzeugs (301) eine fahrerlose Fahrt bezeichnet, während welcher ein Unfall nur mit einer vorbestimmten Unfallwahrscheinlichkeit auftreten wird respektive eine Kollision mit einem Objekt nur mit einer vorbestimmten Kollisionswahrscheinlichkeit auftreten wird,
- wobei die Bestimmungseinrichtung (203) ausgebildet ist, den Ort basierend auf einer Erfassungsreichweite einer Umfeldsensorik des Kraftfahrzeugs (301) und/oder auf einer Erfassungsreichweite einer Umfeldsensorik des Parkplatzes (401) zu bestimmen, so dass der Ort innerhalb der entsprechenden Erfassungsreichweite liegt, **dadurch gekennzeichnet, dass**
- die Umfeldsensorik(en) mehrere Umfeldsensoren mit jeweiligen Erfassungsreichweiten umfasst respektive umfassen, wobei die Bestimmungseinrichtung (203) ausgebildet ist, den Ort basierend auf der kleinsten Erfassungsreichweite der jeweiligen Erfassungsreichweiten zu bestimmen, so dass der Ort innerhalb der kleinsten Erfassungsreichweite liegt.

8. Vorrichtung (201) nach Anspruch 7, wobei die mehreren Umfeldsensoren einer Untermenge der gesamten Umfeldsensoren der jeweiligen Umfeldsensorik entsprechen.

9. Vorrichtung (201) nach Anspruch 7 oder 8, wobei eine Messeinrichtung zum Messen einer momentanen Geschwindigkeit des Kraftfahrzeugs (301) vorgesehen ist, wobei die Bestimmungseinrichtung (203) ausgebildet ist, den Ort basierend auf der gemessenen momentanen Geschwindigkeit zu bestimmen.

10. Vorrichtung (201) nach einem der Ansprüche 7 bis 9, wobei eine Prädizierungseinrichtung zum Prädizieren einer Bewegung von einem sich innerhalb des Parkplatzes (401) befindenden Verkehrsteilnehmer vorgesehen ist, wobei die Bestimmungseinrichtung (203) ausgebildet ist, den Ort basierend auf der prädizierten Bewegung zu bestimmen.

11. Vorrichtung (201) nach einem der Ansprüche 7 bis 10, wobei die Bestimmungseinrichtung (203) ausgebildet ist, nachdem der Ort bestimmt wurde, einen neuen Ort der Solltrajektorie zu bestimmen, der auf der Solltrajektorie demjenigen Ort entspricht, der bezogen auf eine durch die Solltrajektorie vorgegebene Fahrrichtung vor dem bestimmten Ort und mit einem vorgegebenen Distanzsicherheitspuffer beabstandet zu dem bestimmten Ort auf der Solltrajektorie liegt, wobei die Bestimmungseinrichtung (203) ausgebildet ist, den bestimmten neuen Ort durch den bestimmten Ort zu ersetzen, so dass der bestimmte Ort dem bestimmen neuen Ort entspricht.

12. Vorrichtung (201) nach einem der Ansprüche 7 bis 11, wobei die Führungseinrichtung (205) ausgebildet, das Kraftfahrzeug (301) automatisch an dem bestimmten Ort anzuhalten, wenn für eine nach dem bestimmten Ort liegende Teilstrecke der Solltrajektorie kein Ort bestimmt werden konnte, bis zu dem eine sichere fahrerlose Fahrt des Kraftfahrzeugs (301) möglich ist.

13. Kraftfahrzeug (301), umfassend die Vorrichtung nach einem der Ansprüche 7 bis 12.

14. Computerprogrammprodukt, umfassend Programmcode zur Durchführung des Verfahrens nach einem der Ansprüche 1 bis 6.

## Claims

1. Method for operating a motor vehicle (301) travelling driverlessly within a parking space (401), comprising the following steps:
- determining (101), for a prescribed target trajectory to be taken by the motor vehicle (301) within the parking space, up to which location on the target trajectory there is the possibility of safe driverless travel by the motor vehicle (301), and
- the motor vehicle (301) travelling (103) driverlessly to the determined location (417) on the basis of the prescribed target trajectory,
- wherein safe driverless travel by the motor vehicle (301) denotes driverless travel during which an accident will occur only with a predetermined accident probability, or a collision with an object will occur only with a predetermined collision probability,
- wherein the location is determined on the basis of a detection range of an environment sensor system (303) of the motor vehicle (301) and/or on the basis of a detection range of an environment sensor system (407) of the parking space (401), so that the location is within the applicable detection range, **characterized in that**
- the environment sensor system(s) (303, 407) comprises or comprise multiple environment sensors (303, 407) having respective detection ranges, wherein the location is determined on the basis of the shortest detection range of the respective detection ranges, so that the location is within the shortest detection range.

2. Method according to Claim 1, wherein the multiple environment sensors (303, 407) correspond to a subset of all of the environment sensors (303, 407) of the respective environment sensor system (303, 407) .

3. Method according to either of the preceding claims, wherein an instantaneous velocity of the motor vehicle (301) is measured, wherein the location is determined on the basis of the measured instantaneous velocity.

4. Method according to one of the preceding claims, wherein a movement of a road user that is within the parking space (401) is predicted, wherein the location is determined on the basis of the predicted movement.

5. Method according to one of the preceding claims, wherein a distance safety buffer is prescribed, so that after the location has been determined, a new location on the target trajectory is determined that corresponds on the target trajectory to that location that, in relation to a direction of travel prescribed by the target trajectory, is in front of the determined location and separated by the distance safety buffer from the determined location on the target trajectory, wherein the determined new location replaces the determined location.

6. Method according to one of the preceding claims, wherein the motor vehicle (301) automatically stops at the determined location if, for a subsection of the target trajectory that is after the determined location, it has not been possible to determine a location up to which there is the possibility of safe driverless travel by the motor vehicle (301).

7. Apparatus (201) for operating a motor vehicle (301) travelling driverlessly within a parking space (401), comprising:
- a determination device (203) for determining, for a prescribed target trajectory to be taken by the motor vehicle (301) within the parking space (401), up to which location on the target trajectory there is the possibility of safe driverless travel by the motor vehicle (301), and
- a guidance device (205) for driverlessly guiding the motor vehicle (301), wherein the guidance device (205) is designed to driverlessly guide the motor vehicle (301) up to the determined location (417) on the basis of the prescribed target trajectory,
- wherein safe driverless travel by the motor vehicle (301) denotes driverless travel during which an accident will occur only with a predetermined accident probability, or a collision with an object will occur only with a predetermined collision probability,
- wherein the determination device (203) is designed to determine the location on the basis of a detection range of an environment sensor system of the motor vehicle (301) and/or on the basis of a detection range of an environment sensor system of the parking space (401), so that the location is within the applicable detection range, **characterized in that**
- the environment sensor system(s) comprises or comprise multiple environment sensors having respective detection ranges, wherein the determination device (203) is designed to determine the location on the basis of the shortest detection range of the respective detection ranges, so that the location is within the shortest detection range.

8. Apparatus (201) according to Claim 7, wherein the multiple environment sensors correspond to a subset of all of the environment sensors of the respective environment sensor system.

9. Apparatus (201) according to Claim 7 or 8, wherein there is provision for a measuring device for measuring an instantaneous velocity of the motor vehicle (301), wherein the determination device (203) is designed to determine the location on the basis of the measured instantaneous velocity.

10. Apparatus (201) according to one of Claims 7 to 9, wherein there is provision for a prediction device for predicting a movement of a road user that is within the parking space (401), wherein the determination device (203) is designed to determine the location on the basis of the predicted movement.

11. Apparatus (201) according to one of Claims 7 to 10, wherein the determination device (203) is designed so as, after the location has been determined, to determine a new location on the target trajectory that corresponds on the target trajectory to that location that, in relation to a direction of travel prescribed by the target trajectory, is in front of the determined location and separated by the prescribed distance safety buffer from the determined location on the target trajectory, wherein the determination device (203) is designed to replace the determined new location with the determined location, so that the determined location corresponds to the determined new location.

12. Apparatus (201) according to one of Claims 7 to 11, wherein the guidance device (205) is designed to automatically stop the motor vehicle (301) at the determined location if, for a subsection of the target trajectory that is after the determined location, it has not been possible to determine a location up to which there is the possibility of safe driverless travel by the motor vehicle (301).

13. Motor vehicle (301), comprising the apparatus according to one of Claims 7 to 12.

14. Computer program product, comprising program code for performing the method according to one of Claims 1 to 6.

## Revendications

1. Procédé pour faire fonctionner un véhicule automobile (301) qui circule sans conducteur à l'intérieur d'une aire de stationnement (401), comprenant les étapes suivantes :
- détermination (101), pour une trajectoire de consigne prédéfinie à parcourir par le véhicule automobile (301) à l'intérieur de l'aire de stationnement, de l'endroit de la trajectoire de consigne jusqu'auquel une conduite sans conducteur en toute sécurité du véhicule automobile (301) est possible, et
- en se basant sur la trajectoire de consigne prédéfinie, conduite sans conducteur du véhicule automobile (301) jusqu'à l'endroit déterminé (417),
- une conduite sans conducteur en toute sécurité du véhicule automobile (301) désignant une conduite sans conducteur pendant laquelle un accident ne se produira qu'avec une probabilité d'accident prédéterminée ou une collision avec un objet ne se produira qu'avec une probabilité de collision prédéterminée,
- l'endroit étant déterminé en se basant sur une portée de balayage d'un système de détection d'environnement (303) du véhicule automobile (301) et/ou sur une portée de balayage d'un système de détection d'environnement (407) de l'aire de stationnement (401), de sorte que l'endroit se trouve à l'intérieur de la portée de balayage, **caractérisé en ce que**
- le ou les systèmes de détection d'environnement (303, 407) comprend ou comprennent plusieurs capteurs d'environnement (303, 407) ayant des portées de balayage respectives, l'endroit étant déterminé en se basant sur la portée de balayage la plus petite des portées de balayage respectives, de sorte que l'endroit se trouve à l'intérieur de la portée de balayage la plus petite.

2. Procédé selon la revendication 1, les plusieurs capteurs d'environnement (303, 407) correspondant à un sous-ensemble de tous les capteurs d'environnement (303, 407) du système de détection d'environnement (303, 407) respectif.

3. Procédé selon l'une des revendications précédentes, une vitesse momentanée du véhicule automobile (301) étant mesurée, l'endroit étant déterminé en se basant sur la vitesse momentanée mesurée.

4. Procédé selon l'une des revendications précédentes, un mouvement d'un usager de la route qui se trouve à l'intérieur de l'aire de stationnement (401) étant prédit, l'endroit étant déterminé en se basant sur le mouvement prédit.

5. Procédé selon l'une des revendications précédentes, un tampon de sécurité de distance étant prédéfini, de sorte qu'après la détermination de l'endroit, un nouvel endroit de la trajectoire de consigne est déterminé, lequel correspond à l'endroit sur la trajectoire de consigne qui, en référence à une direction de circulation prédéfinie par la trajectoire de consigne, se trouve sur la trajectoire de consigne devant l'endroit déterminé et espacé par le tampon de sécurité de distance de l'endroit déterminé, l'endroit nouvellement déterminé remplaçant l'endroit déterminé.

6. Procédé selon l'une des revendications précédentes, le véhicule automobile (301) s'arrêtant automatiquement à l'endroit déterminé lorsque, pour un segment partiel de la trajectoire de consigne qui se trouve après le point déterminé, aucun endroit n'a pu être déterminé jusqu'auquel une conduite sans conducteur en toute sécurité du véhicule automobile (301) est possible.

7. Arrangement (201) pour faire fonctionner un véhicule automobile (301) qui circule sans conducteur à l'intérieur d'une aire de stationnement (401), comprenant :
- un dispositif de détermination (203) destiné à déterminer, pour une trajectoire de consigne prédéfinie à parcourir par le véhicule automobile (301) à l'intérieur de l'aire de stationnement (401), l'endroit de la trajectoire de consigne jusqu'auquel une conduite sans conducteur en toute sécurité du véhicule automobile (301) est possible, et
- un dispositif de guidage (205) destiné au guidage sans conducteur du véhicule automobile (301), le dispositif de guidage (205) étant configuré pour guider sans conducteur le véhicule automobile (301) jusqu'à l'endroit déterminé (417) en se basant sur la trajectoire de consigne prédéfinie,
- une conduite sans conducteur en toute sécurité du véhicule automobile (301) désignant une conduite sans conducteur pendant laquelle un accident ne se produira qu'avec une probabilité d'accident prédéterminée ou une collision avec un objet ne se produira qu'avec une probabilité de collision prédéterminée,
- le dispositif de détermination (203) étant configuré pour déterminer l'endroit en se basant sur une portée de balayage d'un système de détection d'environnement du véhicule automobile (301) et/ou sur une portée de balayage d'un système de détection d'environnement de l'aire de stationnement (401), de sorte que l'endroit se trouve à l'intérieur de la portée de balayage, **caractérisé en ce que**
- le ou les systèmes de détection d'environnement comprend ou comprennent plusieurs capteurs d'environnement ayant des portées de balayage respectives, le dispositif de détermination (203) étant configuré pour déterminer l'endroit en se basant sur la portée de balayage la plus petite des portées de balayage respectives, de sorte que l'endroit se trouve à l'intérieur de la portée de balayage la plus petite.

8. Arrangement (201) selon la revendication 7, les plusieurs capteurs d'environnement correspondant à un sous-ensemble de tous les capteurs d'environnement du système de détection d'environnement respectif.

9. Arrangement (201) selon la revendication 7 ou 8, un dispositif de mesure destiné à mesurer une vitesse momentanée du véhicule automobile (301)' étant présent, le dispositif de détermination (203) étant configuré pour déterminer l'endroit en se basant sur la vitesse momentanée mesurée.

10. Arrangement (201) selon l'une des revendications 7 à 9, un dispositif de prédiction destiné à prédire un mouvement d'un usager de la route qui se trouve à l'intérieur de l'aire de stationnement (401) étant présent, le dispositif de détermination (203) étant configuré pour déterminer l'endroit en se basant sur le mouvement prédit.

11. Arrangement (201) selon l'une des revendications 7 à 10, le dispositif de détermination (203) étant configuré pour, après la détermination de l'endroit, déterminer un nouvel endroit de la trajectoire de consigne, lequel correspond à l'endroit sur la trajectoire de consigne qui, en référence à une direction de circulation prédéfinie par la trajectoire de consigne, se trouve sur la trajectoire de consigne devant l'endroit déterminé et espacé par un tampon de sécurité de distance prédéfini de l'endroit déterminé, le dispositif de détermination (203) étant configuré pour remplacer l'endroit déterminé par l'endroit nouvellement déterminé, de sorte que l'endroit déterminé correspond à l'endroit nouvellement déterminé.

12. Arrangement (201) selon l'une des revendications 7 à 11, le dispositif de guidage (205) étant configuré pour arrêter le véhicule automobile (301) automatiquement à l'endroit déterminé lorsque, pour un segment partiel de la trajectoire de consigne qui se trouve après le point déterminé, aucun endroit n'a pu être déterminé jusqu'auquel une conduite sans conducteur en toute sécurité du véhicule automobile (301) est possible.

13. Véhicule automobile (301) comprenant l'arrangement selon l'une des revendications 7 à 12.

14. Produit de programme informatique, comprenant un code de programme destiné à mettre en œuvre le procédé selon l'une des revendications 1 à 6.
